(19) Europäisches Patentamt
European Patent Office
Office européen des brevets

(11) Veröffentlichungsnummer: **0 318 431 B1**

(12) **EUROPÄISCHE PATENTSCHRIFT**

(45) Veröffentlichungstag der Patentschrift: **03.03.93**

(51) Int. Cl.⁵: **A01N 53/00**, //(A01N53/00, 47:30)

(21) Anmeldenummer: **88810784.4**

(22) Anmeldetag: **16.11.88**

Die Akte enthält technische Angaben, die nach dem Eingang der Anmeldung eingereicht wurden und die nicht in dieser Patentschrift enthalten sind.

(54) **Motten- und Käferschutzmittel.**

(30) Priorität: **24.11.87 CH 4559/87**

(43) Veröffentlichungstag der Anmeldung: **31.05.89 Patentblatt 89/22**

(45) Bekanntmachung des Hinweises auf die Patenterteilung: **03.03.93 Patentblatt 93/09**

(84) Benannte Vertragsstaaten: **BE CH DE FR GB IT LI**

(56) Entgegenhaltungen:
**EP-A- 0 074 335**
**DE-B- 1 003 717**
**DE-C- 764 891**

(73) Patentinhaber: **CIBA-GEIGY AG**
**Klybeckstrasse 141**
**CH-4002 Basel(CH)**

(72) Erfinder: **Neukom, Alfred Jonathan**
**Bühlmatt 183**
**CH-4468 Kienberg(CH)**
Erfinder: **Reinehr, Dieter, Dr.**
**Wolfsheule 10**
**W-7842 Kandern(DE)**
Erfinder: **Schmid, Werner**
**Keltenweg 40**
**CH-4125 Riehen(CH)**

**EP 0 318 431 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Mittel zum Schützen von Keratinmaterial, wie insbesondere Wolle, Pelze und Federn, gegen den Befall durch keratinfressende Schädlinge, wie insbesondere Motten-und Käferlarven, sowie ein Verfahren zum Schützen von Keratinmaterial gegen den Befall durch Keratinschädlinge, indem das zu schützende Material mit dem erfindungsgemässen Mittel behandelt wird.

Aus den deutschen Patentschriften DE-A-764,891 und DE-A-1,003,717 sind halogenierte wie auch sulfonierte Derivate des Diphenylharnstoffs bekannt, welche eine Wirksamkeit gegen Larven der Kleidermotte und von Anthrenus- und Attagenusarten aufweisen. Sie eignen sich daher zum Schützen von Wolle, Pelzen und Federn gegen Keratinfrass.

Es ist auch bereits bekannt, dass gewisse synthetische Pyrethroide zur Bekämpfung von keratinfressenden Schädlingen verwendet werden können. Siehe z.B. J.Text.Inst. Vol. 67 (1976), 77-81, Deutsche Offenlegungsschrift 2,923,217, U.S. Patentschrift 4,219,593 und Europäische Patentschrift 11 789. Diese Pyrethroide wirken hauptsächlich gegen Mottenlarven, während die Wirkung gegen Larven des Teppichkäfers gering ist.

Es wurde nun gefunden, dass ein Mittel enthaltend (A) mindestens einen Diphenylharnstoff der Formel

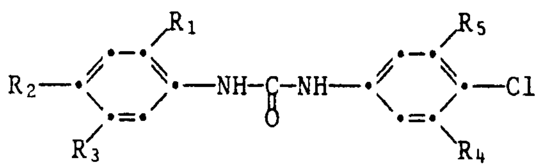

(1)

worin

- $R_1$ Wasserstoff oder 4-Chlorphenoxy-6-sulfonat,
- $R_2$ Wasserstoff oder Chlor,
- $R_3$ Chlor oder Trifluormethyl,
- $R_4$ Wasserstoff oder Chlor und
- $R_5$ Wasserstoff oder Trifluormethyl bedeuten, und

(B) einen Cyclopropancarbonsäureester der allgemeinen Formel

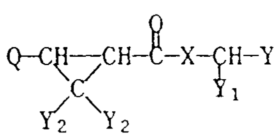

(4),

enthält, worin

Q $Br_2C=CBr-$,

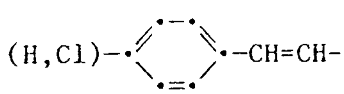

,

$Cl-C\equiv C-$,

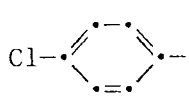

,

$(CH_3)_3C-O-$,

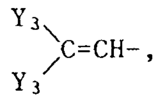

worin $Y_3$ für Cl, Br, F, $CF_3$ oder $C_1$-$C_4$-Alkyl steht,
$CH_2=CH-CH_2-O-$ oder

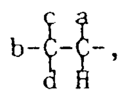

worin a, b, c und d unabhängig voneinanander für Cl, Br oder F stehen, wobei c und d auch für Methyl stehen können,

X Sauerstoff oder Schwefel, $Y_1$ Wasserstoff, CN, $CH_3$, $C_2H_5$, i-$C_3H_7$,

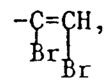

$-C \equiv CH$, $-C \equiv C-CH_3$, $-C \equiv C-C_6H_5$, $-CH=CH-CH_3$, $-CH_2-CH=CH_2$, $-CH=CH_2$ oder $-CH_2-CH=CHCl$,

$Y_2$ Methyl oder beide $Y_2$ zusammmen die Ergänzung zu einem Cyclopropan, Cyclobutan- oder Cyclopentanring und

Y

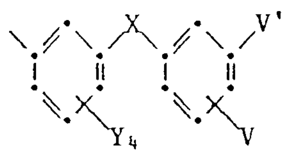

,

worin $Y_4$ für Wasserstoff oder Fluor und V für Wasserstoff, Cl, Br, F, $CH_3$ oder $NO_2$ und V' für Wasserstoff stehen, wobei V' für den Fall, dass V Wasserstoff bedeutet, auch für $CF_3$ stehen kann, und X wie oben definiert ist; ferner Y

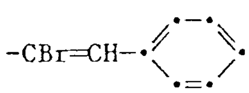 , 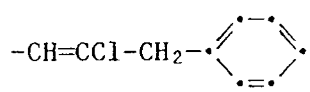 ,

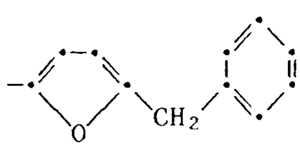 , 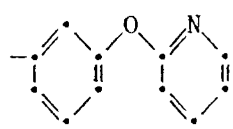 oder 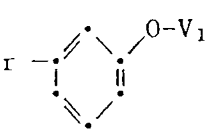 ,

bedeuten,
worin $V_1$ für $-CH_2-CH=CH_2$, $-CH_2-C \equiv CH$, $-CH_2-CH=CH-CH_3$,

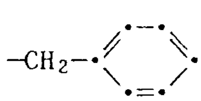 , 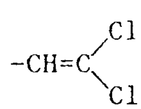 ,

$-CF=CFCl$ oder $-CF=CF_2$ steht, durch einen überraschenderweise synergistischen Effekt, hervorragende Schutzwirkung auf Keratinmaterialien, insbesondere auf Wolle, gegen alle Keratinschädlinge, vor allem

Motten- und Käferlarven besitzt, auch dann schon, wenn es in sehr geringen Konzentrationen eingesetzt wird.

Vorzugsweise enthalten die erfindungsgemässen Mittel Diphenylharnstoffe der Formel (2) und/oder (3)

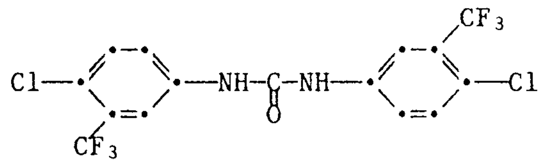

(2)

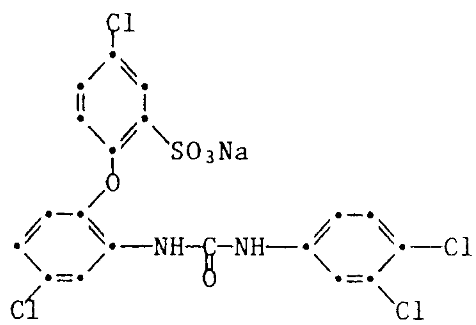

(3)

Als besonders bevorzugte Komponenten (B) können solche der oben definierten Formel (4) eingesetzt werden, worin Q einen Rest der Formel

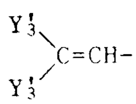

worin $Y_3'$ für Br, Cl oder $CH_3$ steht, X Sauerstoff und Y

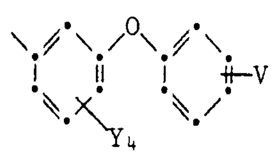

bedeuten. $Y_2$ bedeutet in Formel (4) vorzugsweise $CH_3$ und $Y_1$ Wasserstoff, CN, $CH_3$, $-CH=CH_2$, $-C\equiv CH$ oder $-C\equiv C-CH_3$, insbesondere Wasserstoff oder CN.

In besonders interessanten erfindungsgemässen Mitteln ist die Komponente (B) eine Verbindung aus der Klasse der 3-(2',2'-Dihalogenvinyl)2,2-dimethylcyclopropan-carbonsäure-3''-phenoxybenzylester, insbesondere eine solche der Formel

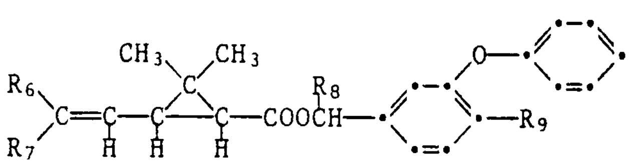

(5)

worin $R_6$ Chlor oder Brom, $R_7$ Chlor, Brom oder 4-Chlorphenyl, $R_8$ Wasserstoff, Cyano, $-CH=CH_2$ oder $-C\equiv C-CH_3$ und $R_9$ Wasserstoff oder Fluor bedeuten. Vor allem enthalten die Mittel neben der Komponente

(A) mindestens eine Verbindung der Formel (6) und/oder (7).

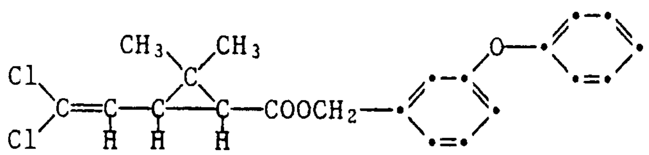

(6)

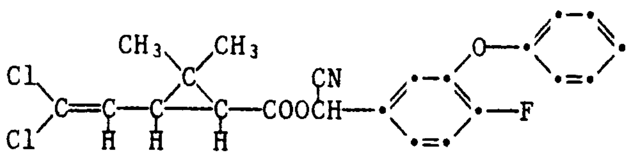

(7)

Besonders bevorzugte synthetische Pyrethroide (B) sind Permethrin und Cypermethrin.

Besonders bevorzugte Mittel enthalten als Kombination einen Diphenylharnstoff der Formel

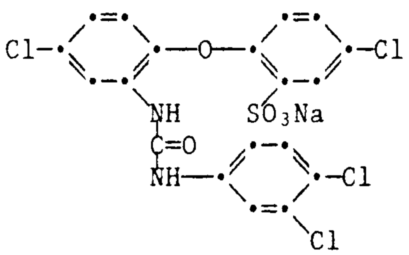

(3)

und als synthetisches Pyrethroid B, Permethrin bzw. einen Diphenylharnstoff der Formel

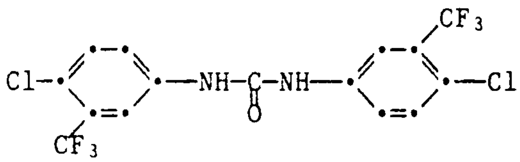

(2)

und als synthetisches Pyrethroid B, Permethrin.

Die erfindungsgemässen Mittel können ausschliesslich aus den Komponenten (A) und (B) bestehen oder sie können andere gegen keratinfressende Insekten wirksamen Schutzmittel enthalten, z.B. Benzimidazole, aromatische Sulfonamide und Phosphor- und Phosphonsäureester. Ausserdem können die Mittel zusätzlich noch weitere Hilfsmittel wie Lösungsmittel, Wasser, Säuren, Basen, Tenside, Netz-, Dispergier- und/oder Emulgiermittel enthalten.

Besonders vorteilhafte Hilfsmittel, die zu einer lagerstabilen, direkt verwendbaren Formulierung führen, werden z.B. in der EP-A 74 335 beschrieben (siehe dort Komponente C bis G). Die vorliegende Erfindung betrifft daher auch Mittel, die die Komponenten C bis G enthalten. Diese dort beschriebenen Komponenten und ihre bevorzugten Vertreter sowie ihre relativen Mengenverhältnisse werden zum Bestandteil der vorliegenden Beschreibung erklärt.

Die Pyrethroide der Formel (4) (Komponente (B)) sind bekannt (z.B DE-A-2.923.217, US-A-4,219.593). Die Diphenylharnstoffe der Formel (1) sind ebenfalls bekannt und können nach an sich bekannten Verfahren erhalten werden.

Das Mischverhältnis der beiden Wirkstoffkomponenten (A) und (B) in den erfindungsgemässen Mitteln (Wirkstoffkombinationen) kann in weiten Grenzen schwanken; es kann beispielsweise zwischen 1:1 bis 16:1

vorzugsweise zwischen 4:1 bis 8:1 liegen.

Die erfindungsgemässen Mittel können zum Schützen von Keratinmaterial gegen keratinfressende Insekten eingesetzt werden, wie z.B. Tineola spec. und Tinea spec. sowie gegen keratinfressende Larven von Coleoptera, z.B. Anthrenus spec. und Attagenus spec. Die Mittel eignen sich vorzüglich zum Schützen von keratinischen bzw. keratinhaltigem Material gegen Insektenfrass, insbesondere zur wasch- und lichtechten Ausrüstung gegen Insekten, insbesondere zur Motten- und Käferechtausrüstung von derartigen Materialien. Es kann keratinisches bzw. keratinhaltiges Material sowohl in rohem als auch in verarbeitetem Zustand ausgerüstet werden, z.B. rohe oder verarbeitete Schafwolle, Produkte aus anderen Tierhaaren, Felle, Pelze und Federn.

Praktisch besonders wichtig ist die Wirksamkeit und damit die Anwendung der erfindungsgemässen Mittel vor allem derjenigen die als Verbindung A einen Diphenylharnstoff der Formel

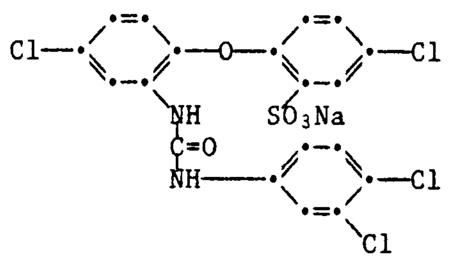

(3)

und als synthetisches Pyrethroid B, Permethrin bzw. die als Verbindung A einen Diphenylharnstoff der Formel

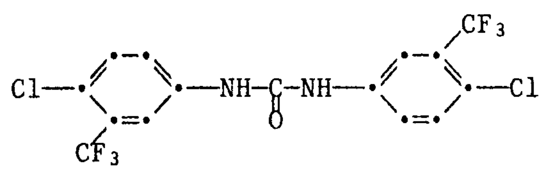

(2)

und als synthetisches Pyrethroid B, Permethrin enthalten gegen die Larven der Kleidermotte (Tineola bisselliella), der Pelzmotte (Tinea translucens) und vor allem der Samenmotte (Hofmannophila pseudopretella) sowie gegen die Larven der Pelz- und Teppichkäfer (Attagenus spec. bzw. Anthrenus spec.), z.B. des Wollkraut-Blütenkäfers (Anthrenus verbasci), des Bibernell-Blütenkäfers (Anthrenus pimpinellae), des Gemeinen Teppichkäfers (Anthrenus scorphilariae), des Bebänderten Teppichkäfers (Anthrenus fasciatus), des Gefleckten Pelzkäfers (Attagenus Pellio) und vor allem des Dunklen Pelzkäfers (Attagenus piceus) und des Teppichkäfers (Anthrenus vorax).

Bevorzugt werden die erfindungsgemässen Mittel einerseits zum Schützen von Textilien aus Wolle, z.B. von Wolldecken, Wollteppichen, Wollwäsche, Wollkleidern und Wirkwaren bzw. wollhaltige Textilien, wie Mischgeweben, deren eine Komponente Wolle ist, z.B. Mischgeweben aus Wolle und anderen Naturfasern, vorzugsweise Baumwolle, oder aus Wolle und Kunstfasern, andererseits auch zum Schützen von Pelzen und Fellen vor dem Befall durch die erwähnten Schädlinge eingesetzt.

Die vorliegende Erfindung betrifft auch ein Verfahren zum Schützen von Keratinmaterial, insbesondere von Wolltextilien, vor dem Befall durch Keratinschädlinge, z.B. Motten- und Käferlarven, das dadurch gekennzeichnet ist, dass man das zu schützende Material mit einer Kombination aus einem oder mehreren Diphenylharnstoff(en) der Formel (1) und einem oder mehreren synthetischen Pyrethroid(en) der Formel (4), vorzugsweise solchen der Formeln (6) und (7), behandelt. Zu diesem Zweck wird in der Regel diese Wirkstoffkombination, die als erfindungsgemässes Mittel gegebenenfalls noch weitere Schutzmittel und/oder Hilfsmittel enthalten kann, in eine Applikationsflotte eingebracht, der gegebenenfalls noch übliche Textilhilfsmittel oder/und Farbstoffe zugefügt werden können, und mit dieser Flotte das zu schützende Material imprägniert. Die beiden Wirkstoffkomponenten (A) und (B) können der Applikationsflotte selbstverständlich auch getrennt zugegeben werden.

Die zu schützenden Materialien, insbesondere Textilmaterialien, können z.B. durch heisse oder kalte wässrige Färbe-, Bleich-, Chromierungs- oder Nachbehandlungsbäder, die einen bestimmten Teil einer erfindungsgemässen Wirkstoffkombination enthalten, imprägniert werden, wobei verschiedene Textilausrüstungsverfahren, wie z.B. das Foulard- oder Ausziehverfahren, in Frage kommen.

Die jeweils eingesetzte Menge an erfindungsgemässem Mittel, die in das jeweilige Applikationsbad eingebracht wird, hängt vom jeweiligen Substrat und der Applikationsmethode ab. Diese Menge wird üblicherweise jedoch so bemessen, dass nach dem Aufziehen auf das jeweils zu schützende Material letzteres etwa 10 bis 2000 ppm, vorzugsweise 100 bis 1 000 ppm der Wirksubstanzkombination, also an Komponente (A) + (B) enthält. Dies ergibt z.B. für das Ausziehverfahren bei einem Flottenverhältnis von 1:20 Konzentrationen von 0,001 bis 1 g Wirksubstanz/1 Behandlungsbad, je nach erreichbarem Ausziehgrad. Beim Foulardverfahren sind Konzentration bis 2 g Wirksubstanz pro Liter möglich.

In den nachfolgenden Beispielen sind, sofern nichts anderes angegeben ist, Teile, Gewichtsteile und Prozente Gewichtsprozente.

Beispiel 1:

2,1 Teile Permethrin,
5,0 Teile mit 6-7 Mol Aethylenoxid äthoxyliertes Talgfettamin,
25,0 Teile Dimethyllaurylaminoxid,
14,5 Teile eines Blockpolymeren aus Propylenglykol und Aethylenoxid (mittleres Molekulargewicht: 4900; 80 % hydrophobe Gruppen, 20 % hydrophile Gruppen; HLB = 4),
7.5 Teile Rizinuspolyglykoläther,
3,0 Teile Alkylphenolpolyglykolätherphosphat und
34,5 Teile Dimethylmethanphosphonat (DMMP)
werden gemischt. Zu dieser Mischung werden unter ständigem Rühren bei 45-55 °C 8,4 Teile der Verbindung der Formel

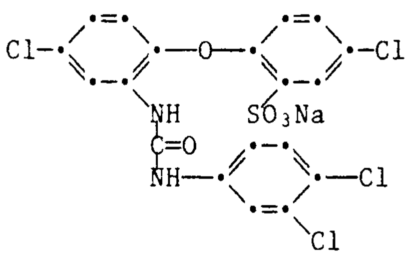

(3)

gegeben, bis eine homogene Formulierung entsteht. Diese so erhaltene Mottenschutzformulierung ist lagerstabil, mit Wasser mischbar und sie führt bei der Applikation auf Keratinmaterial zu ausgezeichneten Motten- und Käferechtausrüstungen.

In der oben beschriebenen Formulierung kann Permethrin durch Cypermethrin, die Verbindung der Formel (3) durch die Verbindung der Formel

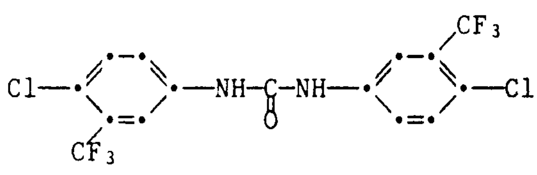

(2)

DMMP durch N-Methyl-2-pyrrolidon, Diäthylenglykoläthyläther, Aethylpolyglykol oder Polydiole und/oder Alkylphenolpolyglykolätherphosphat durch Bernsteinsäure, Milchsäure, Ameisensäure oder Essigsäure ersetzt werden. Man kommt dann zu Formulierungen mit ähnlich guten Eigenschaften.

Die in den folgenden Beispielen angeführten Formulierungen werden analog Beispiel 1 erhalten, d.h. die Bestandteile mit Ausnahme des Diphenylharnstoffs werden gemischt und letzteres wird anschliessend in der beschriebenen Weise eingearbeitet. Alle diese so erhaltenen Formulierungen weisen die geforderten Eigenschaften auf, nämlich gute Lagerstabilität, Mischbarkeit mit Wasser und problemlose Applikation auf Keratinmaterialien.

Beispiel 2:

Die Formulierung folgender Zusammensetzungen wird analog Beispiel 1 erhalten
1,2 Teile Permethrin,
9,6 Teile der Verbindung der Formel

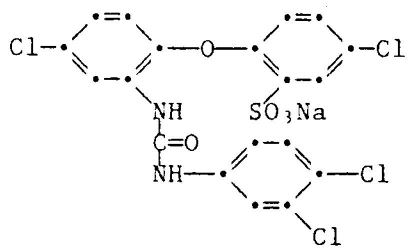

(3)

19,8 Teile mit 6-7 Mol Aethylenoxid äthoxyliertes Talgfettamin,
10,0 Teile eines Blockpolymeren aus Propylenglykol und Aethylenoxid (mittleres Molekulargewicht: 4900; 80 hydrophobe Gruppen, 20 % hydrophile Gruppen; HLB = 4),
5,0 Teile mit 8-9 Mol Aethylenoxid äthoxylierter Stearylalkohol
1,4 Teile eines Alkylphosphorsäurepartialesters,
53,0 Teile Dimethylmethanphosphonat (DMMP).

In der oben beschriebenen Formulierung kann Permethrin durch Cypermethrin, die Verbindung der Formel (3) durch die Verbindung der Formel

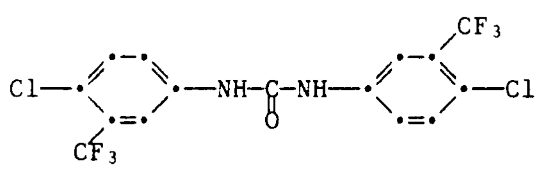

(2)

DMMP durch N-Methyl-2-pyrrolidon, Diäthylenglykoläthyläther, Aethylpolyglykol oder Polydiole und/oder Alkylphenolpolyglykolätherphosphat durch Bernsteinsäure, Milchsäure, Ameisensäure oder Essigsäure ersetzt werden. Man kommt dann zu Formulierungen mit ähnlich guten Eigenschaften.

Beispiel 3:

0,6 Teile Permethrin
58,4 Teile 1,2-Propylenglykol
1,0 Teile Fettamin + Aethylenoxyd (Neovadin AN)
werden gemischt. Zu dieser Mischung werden unter ständigem Rühren bei 45-55 °C 40 Teile der Verbindung der Formel

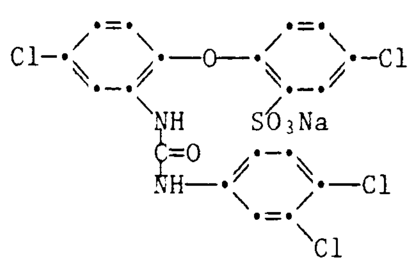

(3)

gegeben, bis eine homogene Formulierung entsteht. Diese so erhaltene Mottenschutzformulierung ist lagerstabil, mit Wasser mischbar und sie führt bei der Applikation auf Keratinmaterial zu ausgezeichneten Motten-und Käferechtausrüstungen und einem speziell guten Schutz gegen die Samenmotte

(Hofmannophila pseudospretella).

Beispiel 4:

1,0 Teile Permethrin
30,0 Teile Dibutyldiglykol
17,0 Teile Diethylenglykolmonobutyläther
27,0 Teile Tributylphenol mit 11 E0 (Ethylenoxyd)
werden gemischt. Zu dieser Mischung werden unter ständigem Rühren bei 45-55 °C 25 Teile der Verbindung der Formel

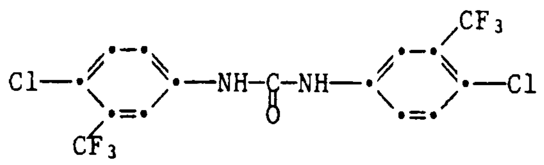

(2)

gegeben, bis eine homogene Formulierung entsteht. Diese so erhaltene Mottenschutzformulierung ist lagerstabil, mit Wasser mischbar und sie führt bei der Applikation auf Keratinmaterial zu ausgezeichneten Motten-und Käferechtausrüstungen und einem speziell guten Schutz gegen die Samenmotte (Hofmannophila pseudospretella).

## Patentansprüche

1. Synergistisches Mittel zum Schützen von Keratinmaterial gegen den Befall durch Keratinschädlinge, dadurch gekennzeichnet, dass es
   (A) mindestens einen Diphenylharnstoff der Formel

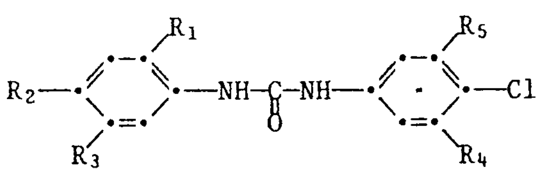

(1)

worin
$R_1$ Wasserstoff oder 4-Chlorphenoxy-6-sulfonat,
$R_2$ Wasserstoff oder Chlor,
$R_3$ Chlor oder Trifluormethyl,
$R_4$ Wasserstoff oder Chlor und
$R_5$ Wasserstoff oder Trifluormethyl bedeuten, und
(B) einen Cyclopropancarbonsäureester der allgemeinen Formel

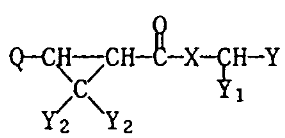

(4),

enthält, worin
Q $Br_2C=CBr$-,

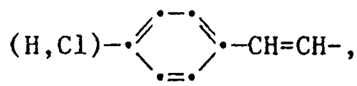

Cl-C≡C-,

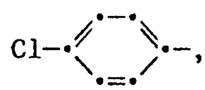

$(CH_3)_3C$-O-,

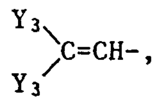

worin $Y_3$ für Cl, Br, F, $CF_3$ oder $C_1$-$C_4$-Alkyl steht,
$CH_2$ = CH-$CH_2$-O- oder

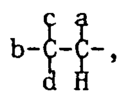

worin a, b, c und d unabhängig voneinanander für Cl, Br oder F stehen, wobei c und d auch für Methyl stehen können,

X Sauerstoff oder Schwefel, $Y_1$ Wasserstoff, CN, $CH_3$` $C_2H_5$, i-$C_3H_7$,

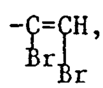

-C≡CH, -C≡C-$CH_3$, -C≡C-$C_6H_5$, -CH = CH-$CH_3$, -$CH_2$-CH = $CH_2$, -CH = $CH_2$ oder -$CH_2$-CH = CHCl,

$Y_2$ Methyl oder beide $Y_2$ zusammmen die Ergänzung zu einem Cyclopropan, Cyclobutan- oder Cyclopentanring und

Y

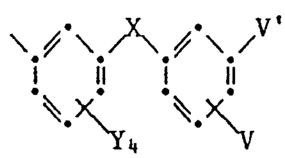
,

worin $Y_4$ für Wasserstoff oder Fluor und V für Wasserstoff, Cl, Br, F, $CH_3$ oder $NO_2$ und V' für Wasserstoff stehen, wobei V' für den Fall, dass V Wasserstoff bedeutet, auch für $CF_3$ stehen kann, und X wie oben definiert ist; ferner Y

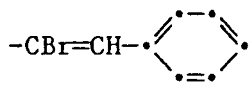 , 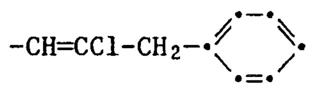 ,

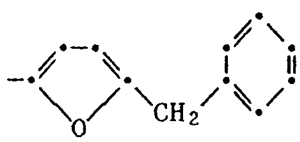 , 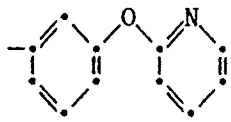 oder 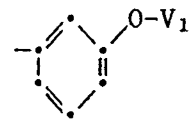 ,

bedeuten,
worin $V_1$ für $-CH_2-CH=CH_2$, $-CH_2-C\equiv CH$, $-CH_2-CH=CH-CH_3$,

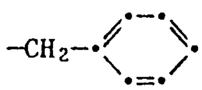 , 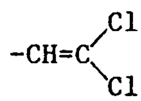 ,

$-CF=CFCl$ oder $-CF=CF_2$ steht.

2. Mittel gemäss Anspruch 1, dadurch gekennzeichnet, dass es als Verbindung (A) den Diphenylharnstoff der Formel

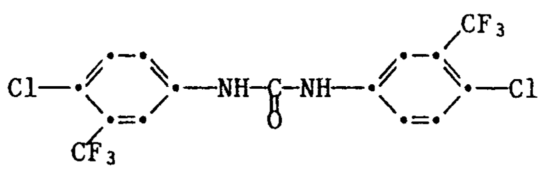 (2)

enthält.

3. Mittel gemäss Anspruch 1, dadurch gekennzeichnet, dass es als Verbindung (A) den Diphenylharnstoff der Formel

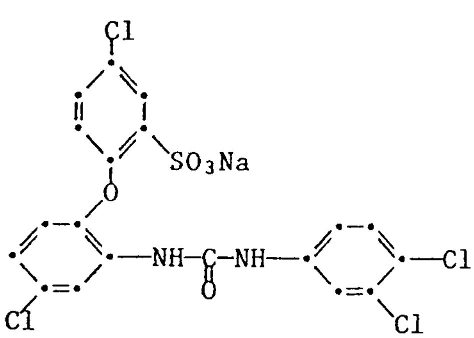 (3)

enthält.

4. Mittel gemäss Anspruch 1, dadurch gekennzeichnet dass es als Verbindung (B) mindestens einen Cyclopropancarbonsäureester der Formel

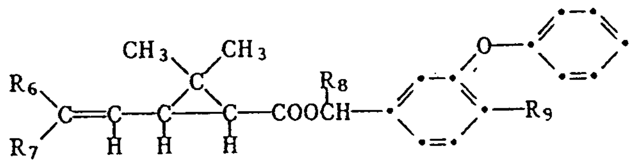

(5)

enthält, worin

$R_6$ Chlor oder Brom,
$R_7$ Chlor, Brom oder 4-Chlorphenyl,
$R_8$ Wasserstoff, Cyan, $-CH=CH_2$ oder $-C\equiv C-CH_3$, und
$R_9$ Wasserstoff oder Fluor bedeuten.

**5.** Mittel gemäss Anspruch 1, dadurch gekennzeichnet dass es als synthetisches Pyrethroid Permethrin oder Cypermethrin enthält.

**6.** Mittel gemäss Anspruch 1, dadurch gekennzeichnet, dass es als Verbindung (A) mindestens einen der beiden Diphenylharnstoffe der Formeln (2) und (3) gemäss der Ansprüche 2 und 3 und als Verbindung (B) mindestens einen der beiden Cyclopropancarbonsäureester der Formeln

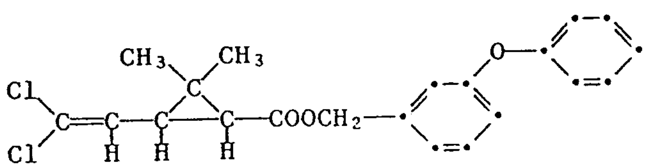

(6)

und

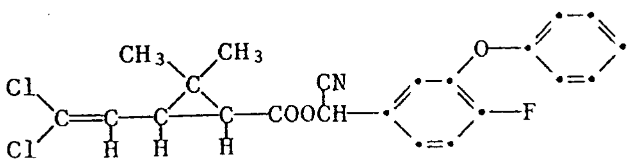

(7)

enthält.

**7.** Mittel gemäss Anspruch 1, dadurch gekennzeichnet, dass es als Verbindung A einen Diphenylharnstoff der Formel

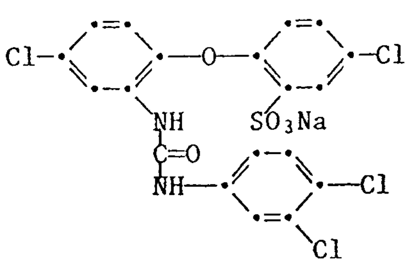

(3)

und als synthetisches Pyrethroid B, Permethrin enthält.

**8.** Mittel gemäss Anspruch 1, dadurch gekennzeichnet, dass es als Verbindung A einen Diphenylharnstoff der Formel

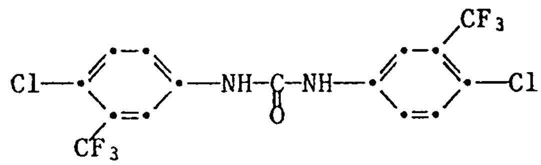

(2)

und als synthetisches Pyrethroid B, Permethrin enthält.

**9.** Mittel gemäss Anspruch 1, dadurch gekennzeichnet, dass es die Verbindungen (A) und (B) im Mengenverhältnis von 1:1 bis 16:1 enthält.

**10.** Mittel gemäss Anspruch 9, dadurch gekennzeichnet, dass das Mengenverhältnis der Verbindungen (A)-:(B) 4:1 bis 8:1 beträgt.

**11.** Mittel nach einem der Ansprüche 1 bis 9, dadurch gekennzeichnet, dass es neben den Komponenten (A) und (B) noch weitere Schutz- und/oder Hilfsmittel enthält.

**12.** Verfahren zum Schützen von Keratinmaterial gegen den Befall durch Keratinschädlinge, dadurch gekennzeichnet, dass man das zu schützende Material mit einem Synergistischen Mittel enthaltend (A) mindestens einen Diphenylharnstoff der Formel

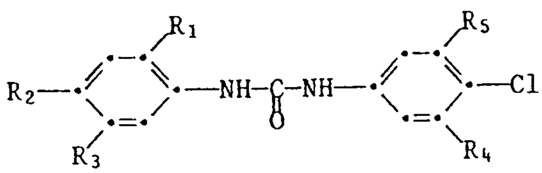

(1)

worin

$R_1$ Wasserstoff oder 4-Chlorphenoxy-6-sulfonat,
$R_2$ Wasserstoff oder Chlor,
$R_3$ Chlor oder Trifluormethyl,
$R_4$ Wasserstoff oder Chlor und
$R_5$ Wasserstoff oder Trifluormethyl bedeuten, und

(B) einen Cyclopropancarbonsäureester der allgemeinen Formel

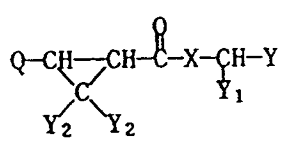

(4),

behandelt, worin

Q $Br_2C=CBr$-,

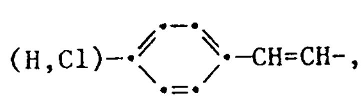

Cl-C≡C-,

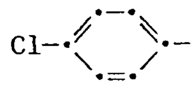,

$(CH_3)_3C$-O-,

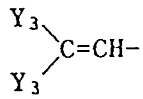,

worin $Y_3$ für Cl, Br, F, $CF_3$ oder $C_1$-$C_4$-Alkyl steht,
$CH_2=CH$-$CH_2$-O- oder

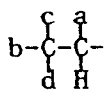,

worin a, b, c und d unabhängig voneinanander für Cl, Br oder F stehen, wobei c und d auch für Methyl stehen können,

X Sauerstoff oder Schwefel, $Y_1$ Wasserstoff, CN, $CH_3$, $C_2H_5$, i-$C_3H_7$,

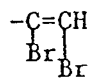,

-C≡CH, -C≡C-$CH_3$, -C≡C-$C_6H_5$, -CH=CH-$CH_3$, -$CH_2$-CH=$CH_2$, -CH=$CH_2$ oder -$CH_2$-CH=CHCl,

$Y_2$ Methyl oder beide $Y_2$ zusammmen die Ergänzung zu einem Cyclopropan, Cyclobutan- oder Cyclopentanring und

Y

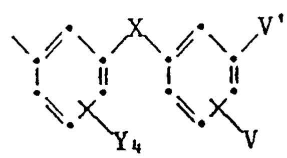,

worin $Y_4$ für Wasserstoff oder Fluor und V für Wasserstoff, Cl, Br, F, $CH_3$ oder $NO_2$ und V' für Wasserstoff stehen, wobei V' für den Fall, dass V Wasserstoff bedeutet, auch für $CF_3$ stehen kann, und X wie oben definiert ist; ferner Y

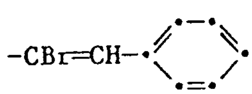, 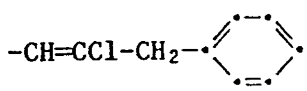,

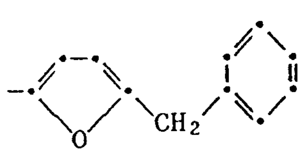, 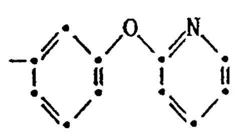 oder 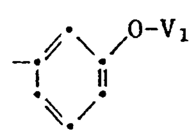,

bedeuten,

worin $V_1$ für $-CH_2-CH=CH_2$, $-CH_2-C\equiv CH$, $-CH_2-CH=CH-CH_3$,

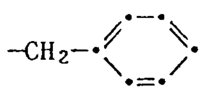 , 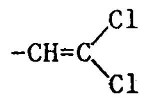 ,

$-CF=CFCl$ oder $-CF=CF_2$ steht.

**13.** Verfahren gemäss Anspruch 12, dadurch gekennzeichnet dass man auf die zu schützenden Materialien das Mittel in einer Menge von 10 bis 2000 ppm, vorzugsweise 100 bis 1000 ppm, bezogen auf das zu schützende Material, bringt.

**14.** Anwendung des Mittels gemäss Anspruch 1 auf die Samenmotte.

**15.** Anwendung gemäss Anspruch 14, dadurch gekennzeichnet, dass das Mittel als Verbindung A einen Diphenylharnstoff der Formel

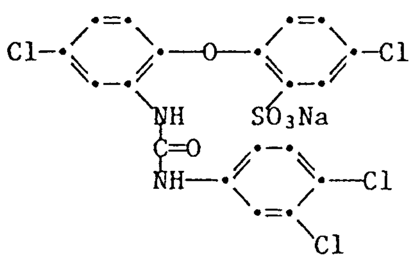 (3)

und als synthetisches Pyrethroid B, Permethrin enthält.

**16.** Anwendung gemäss Anspruch 14, dadurch gekennzeichnet, dass das Mittel als Verbindung A einen Diphenylharnstoff der Formel

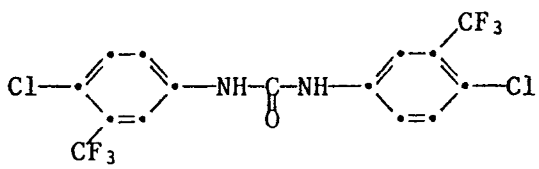 (2)

und als synthetisches Pyrethroid B, Permethrin enthält.

**Claims**

**1.** A synergistic agent for proofing keratinous material against attack by keratin pests, which contains
(A) at least one diphenylurea of the formula

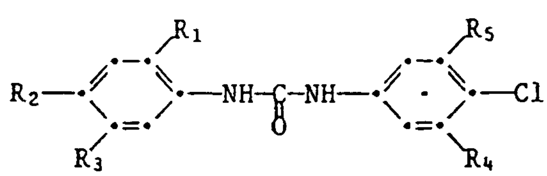 (1)

in which $R_1$ is hydrogen or 4-chlorophenoxy-6-sulfonate, $R_2$ is hydrogen or chlorine, $R_3$ is chlorine or trifluoromethyl, $R_4$ is hydrogen or chlorine and $R_5$ is hydrogen or trifluoromethyl, and

(B) a cyclopropanecarboxylic acid ester of the general formula

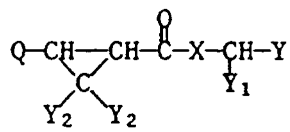

(4)

in which Q is $Br_2C=CBr$-,

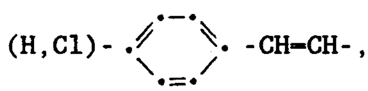

Cl-C≡C-,

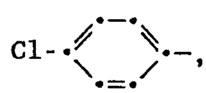

$(CH_3)_3C$-O-,

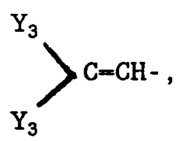

in which $Y_3$ is Cl, Br, F, $CF_3$ or $C_1$-$C_4$alkyl, $CH_2=CH$-$CH_2$-O- or

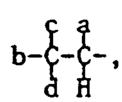

in which a, b, c and d, independently of one another , are Cl, Br or F, where c and d can also be methyl, X is oxygen or sulfur, $Y_1$ is hydrogen, CN, $CH_3$, $C_2H_5$, i-$C_3H_7$,

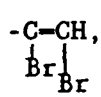

-C≡CH, -C≡C-$CH_3$, -C≡C-$C_6H_5$, -CH=CH-$CH_3$, -$CH_2$-CH=$CH_2$, -CH=$CH_2$ or -$CH_2$-CH=CHCl, $Y_2$ is methyl or both symbols $Y_2$ complete a cyclopropane, cyclobutane or cyclopentane ring and Y is

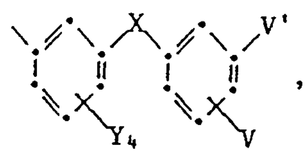

in which $Y_4$ is hydrogen or fluorine and V is hydrogen, Cl, Br, F, $CH_3$ or $NO_2$ and V' is hydrogen, where V' can also be $CF_3$ if V is hydrogen, and X is as defined above; Y is also

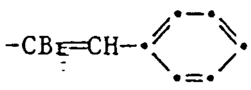 , 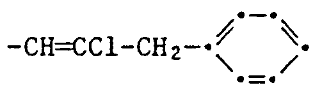 ,

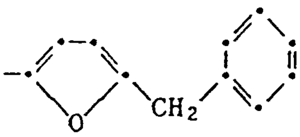 , 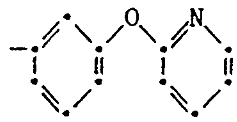 or 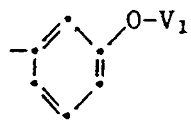 ,

in which $V_1$ is $-CH_2-CH=CH_2$, $-CH_2-C\equiv CH$, $-CH_2-CH=CH-CH_3$,

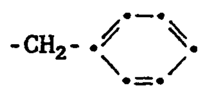 ,

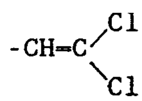 ,

$-CF=CFCl$ or $-CF=CF_2$.

2. An agent according to claim 1, which contains, as compound (A), the diphenylurea of the formula

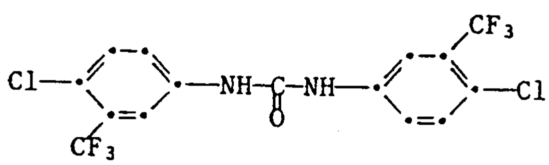 (2)

3. An agent according to claim 1, which contains, as compound (A), the diphenylurea of the formula

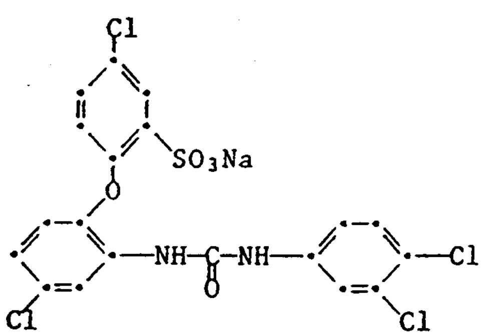 (3)

4. An agent according to claim 1, which contains, as compound (B) at least one cyclopropane carboxylic acid ester of the formula

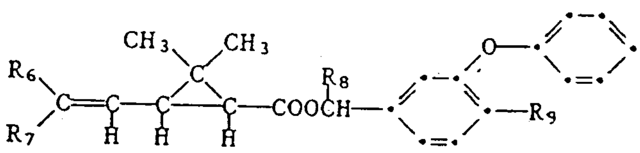

(5)

in which $R_6$ is chlorine or bromine, $R_7$ is chlorine, bromine or 4-chlorophenyl, $R_8$ is hydrogen, cyano, $-CH=CH_2$ or $-C{\equiv}C-CH_3$ and $R_9$ is hydrogen or fluorine.

5. An agent according to claim 1, which contains, as synthetic pyrethroid, permethrin or cypermethrin.

6. An agent according to claim 1, which contains, as compound (A), at least one of the two diphenylureas of the formulae (2) and (3) according to claims 2 and 3 and, as compound (B), at least one of the two cyclopropanecarboxylic acid esters of the formulae

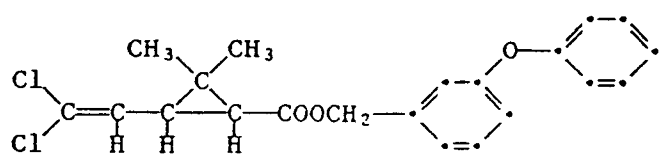

(6)

and

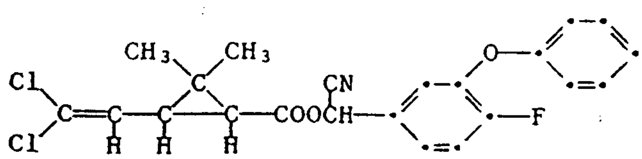

(7)

7. An agent according to claim 1, which contains, as compound (A), a diphenylurea of the formula

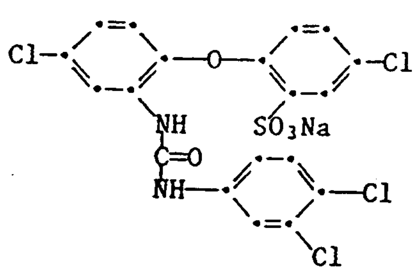

(3)

and, as synthetic pyrethroid B, permethrin.

8. An agent according to claim 1, which contains, as compound (A), a diphenylurea of the formula

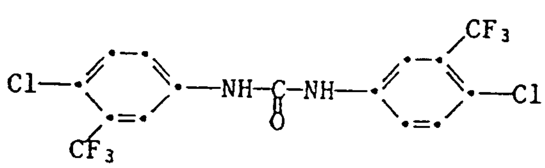

(2)

and, as synthetic pyrethroid B, permethrin.

9. An agent according to claim 1, which contains the compounds (A) and (B) in the ratio of from 1:1 to 16:1.

10. An agent according to claim 9, wherein the ratio of compounds (A):(B) is from 4:1 to 8:1.

11. An agent according to any one of claims 1 to 9, which also contains further proofing agents and/or auxiliaries in addition to components (A) and (B).

12. A process for proofing keratinous material against attack by keratin pests, which comprises treating the material to be proofed with a synergistic agent containing (A) at least one diphenylurea of the formula

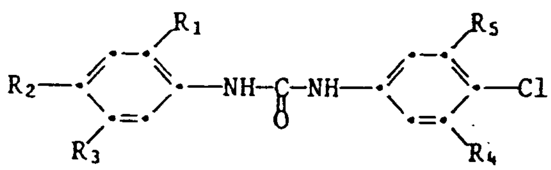 (1)

in which $R_1$ is hydrogen or 4-chlorophenoxy-6-sulfonate, $R_2$ is hydrogen or chlorine, $R_3$ is chlorine or trifluoromethyl, $R_4$ is hydrogen or chlorine and $R_5$ is hydrogen or trifluoromethyl, and
(B) a cyclopropanecarboxylic acid ester of the general formula

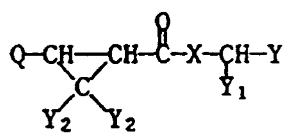 (4)

in which Q is $Br_2C=CBr$-,

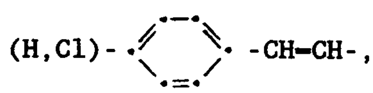

Cl-C≡C,

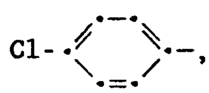

$(CH_3)_3C$-O-,

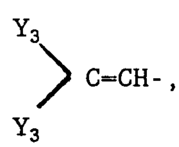

in which $Y_3$ is Cl, Br, F, $CF_3$ or $C_1$-$C_4$alkyl, $CH_2=CH$-$CH_2$-O- or

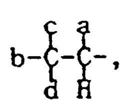

in which a, b, c and d, independently of one another , are Cl, Br or F, where c and d can also be

methyl, X is oxygen or sulfur, $Y_1$ is hydrogen, CN, $CH_3$, $C_2H_5$, i-$C_3H_7$,

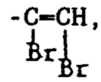

-C≡CH, -C≡C-$CH_3$, -C≡C-$C_6H_5$, -CH = CH-$CH_3$, -$CH_2$-CH = $CH_2$, -CH = $CH_2$ or -$CH_2$-CH-CHCl, $Y_2$ is methyl or both symbols $Y_2$ complete a cyclopropane, cyclobutane or cyclopentane ring and Y is

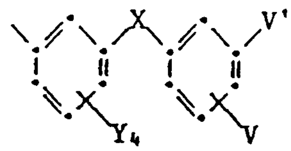 ,

in which $Y_4$ is hydrogen or fluorine and V is hydrogen, Cl, Br, F, $CH_3$ or $NO_2$ and V' is hydrogen, where V' can also be $CF_3$ if V is hydrogen, and X is as defined above; Y is also

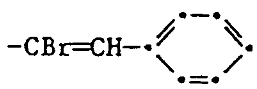 , 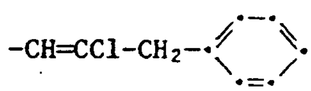 ,

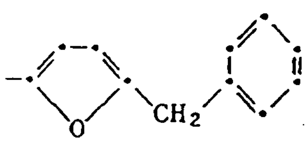 , 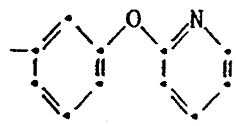 or 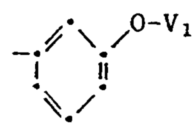 ,

in which $V_1$ is -$CH_2$-CH = $CH_2$, -$CH_2$-C≡CH, -$CH_2$-CH = CH-$CH_3$,

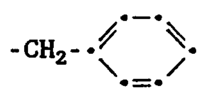 ,

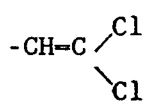 ,

-CF = CFCl or -CF = $CF_2$.

**13.** A process according to claim 12, which comprises applying the agent to the materials to be proofed in an amount of from 10 to 2,000 ppm, preferably 100 to 1,000 ppm, based on the material to be proofed.

**14.** The use of the agent according to claim 1 for the seed moth.

**15.** The use according to claim 14, wherein the agent contains, as compound A, a diphenylurea of the formula

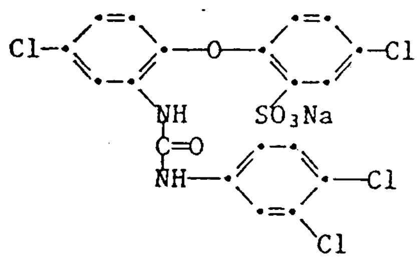

(3)

and, as synthetic pyrethroid B, permethrin.

**16.** The use according to claim 14, wherein the agent contains, as compound A, a diphenylurea of the formula

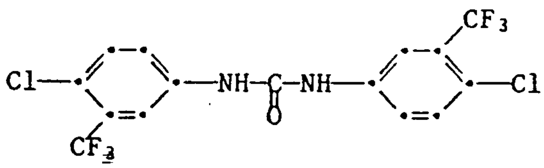

(2)

and, as synthetic pyrethroid B, permethrin.

## Revendications

**1.** Agent synergique pour la protection de matériaux à base de kératine contre l'attaque des parasites de la kératine, caractérisé en ce qu'il contient

(A) au moins une diphénylurée de formule

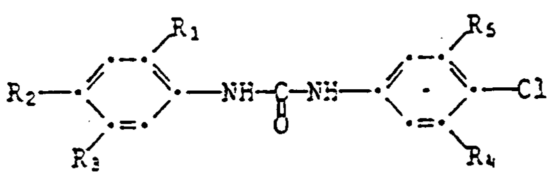

(1)

dans laquelle

$R_1$ représente un atome d'hydrogène ou un groupe 4-chlorophénoxy-6-sulfonate,
$R_2$ représente un atome d'hydrogène ou de chlore,
$R_3$ représente un atome de chlore ou un groupe trifluorométhyle,
$R_4$ représente un atome d'hydrogène ou de chlore, et
$R_5$ représente un atome d'hydrogène ou un groupe trifluorométhyle, et

(B) un ester d'acide cyclopropanecarboxylique, de formule générale

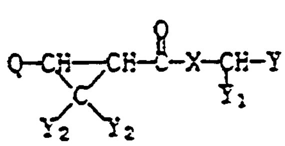

(4)

dans laquelle

Q représente $Br_2C=CBr-$,

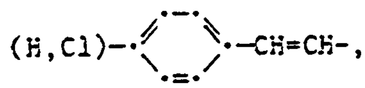

Cl-C≡C-,

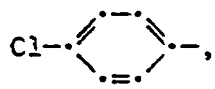

$(CH_3)_3C$-O,

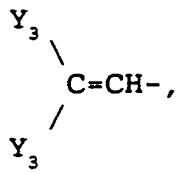

$Y_3$ représentant Cl, Br, F, $CF_3$ ou un groupe alkyle en $C_1$-$C_4$, $CH_2=CH-CH_2$-O- ou

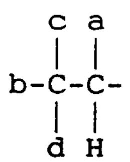

a, b, c et d représentant, indépendamment les uns des autres, Cl, Br ou F, c et d pouvant également représenter un groupe méthyle,

X représente un atome d'oxygène ou de soufre,

$Y_1$ représente un atome d'hydrogène ou un groupe CN, $CH_3$, $C_2H_5$, i-$C_3H_7$,

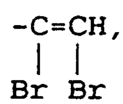

-C≡CH, -C≡C-$CH_3$, -C≡C-$C_6H_5$, -CH=CH-$CH_3$, -$CH_2$-CH=$CH_2$, -CH=$CH_2$ ou -$CH_2$-CH=CHCl,

$Y_2$ représente un groupe méthyle, ou les deux $Y_2$ représentent conjointement le complément d'un cycle cyclopropane, cyclobutane ou cyclopentane, et

Y représente

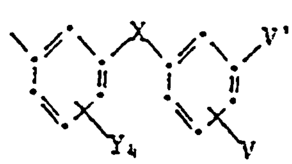

formule dans laquelle $Y_4$ représente un atome d'hydrogène ou de fluor, V représente un atome d'hydrogène, de chlore, de brome ou de fluor ou un groupe méthyle ou nitro, et V' représente un atome d'hydrogène, V' pouvant également représenter le groupe trifluorométhyle dans le cas où V représente un atome d'hydrogène, et X est tel que défini ci-dessus,

Y pouvant encore représenter

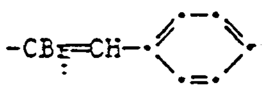 , 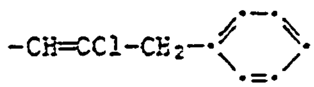 ,

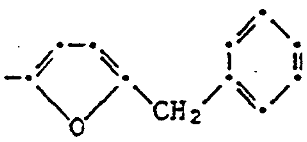 , 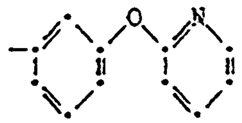 ou 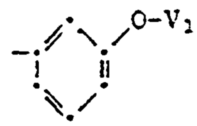 ,

formules dans lesquelles $V_1$ représente $-CH_2-CH=CH_2$, $-CH_2-C\equiv CH$, $-CH_2-CH=CH-CH_3$,

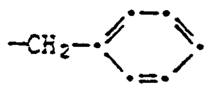 , 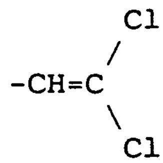 ,

$-CF=CFCl$ ou $-CF=CF_2$.

**2.** Agent conforme à la revendication 1, caractérisé en ce qu'il contient, en tant que composé (A), la diphénylurée de formule

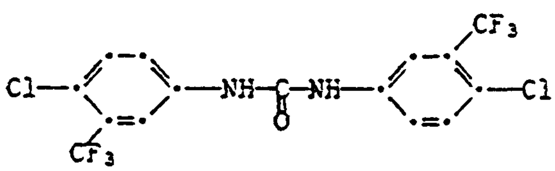

(2)

**3.** Agent conforme à la revendication 1, caractérisé en ce qu'il contient, en tant que composé (A), la diphénylurée de formule

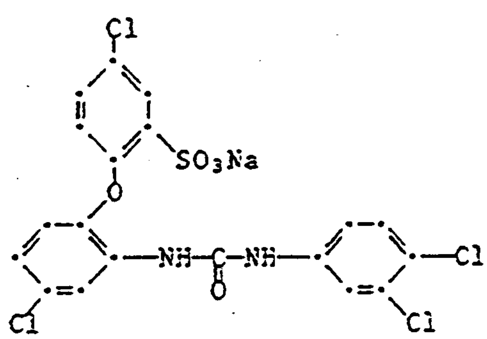

(3)

**4.** Agent conforme à la revendication 1, caractérisé en ce qu'il contient, comme composé (B), au moins un ester d'acide cyclopropanecarboxylique de formule

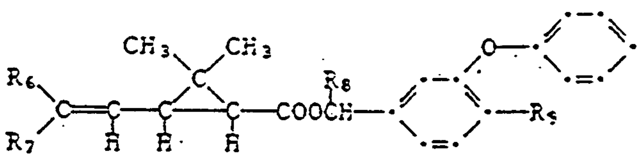

(5)

dans laquelle

- $R_6$ représente un atome de chlore ou de brome,
- $R_7$ représente un atome de chlore ou de brome ou un groupe 4-chlorophényle,
- $R_8$ représente un atome d'hydrogène ou un groupe cyano, $-CH=CH_2$ ou $-C\equiv C-CH_3$, et
- $R_9$ représente un atome d'hydrogène ou de fluor.

**5.** Agent conforme à la revendication 1, caractérisé en ce qu'il contient, en tant que pyréthroïde synthétique, de la perméthrine ou de la cyperméthrine.

**6.** Agent conforme à la revendication 1, caractérisé en ce qu'il contient, en tant que composé (A), au moins l'une des deux diphénylurées de formules (2) et (3) indiquées dans les revendications 2 et 3, et, en tant que composé (B), au moins l'un des deux esters d'acide cyclopropanecarboxylique de formules

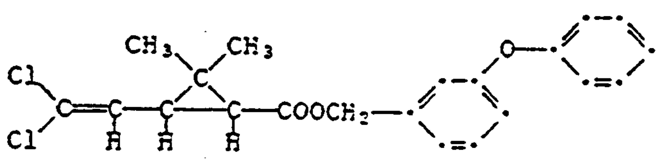

(6)

et

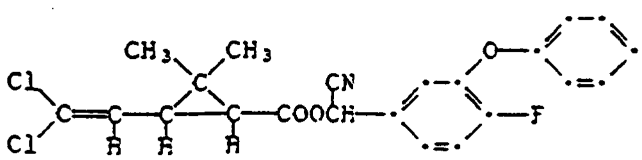

(7)

**7.** Agent conforme à la revendication 1, caractérisé en ce qu'il contient, en tant que composé (A), une diphénylurée de formule

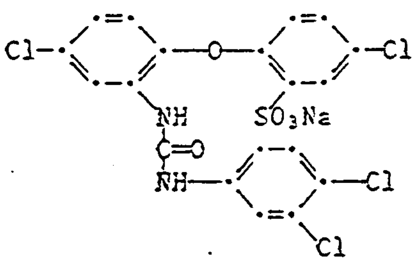

(3)

et, en tant que pyréthroïde synthétique (B), de la perméthrine.

**8.** Agent conforme à la revendication 1, caractérisé en ce qu'il contient, en tant que composé (A), une diphénylurée de formule

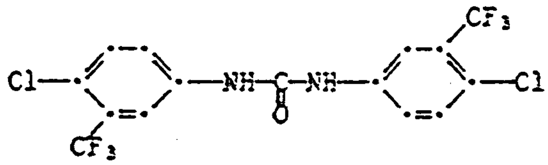

(2)

et, en tant que pyréthroïde synthétique (B), de la perméthrine.

**9.** Agent conforme à la revendication 1, caractérisé en ce qu'il contient les composés (A) et (B) en un rapport quantitatif valant de 1/1 à 16/1.

**10.** Agent conforme à la revendication 9, caractérisé en ce que le rapport quantitatif des composés (A)/(B) vaut de 4/1 à 8/1.

**11.** Agent conforme à l'une des revendications 1 à 9, caractérisé en ce qu'il contient, en plus des composants (A) et (B), encore d'autres agents de protection et/ou des adjuvants.

**12.** Procédé de protection de matériaux à base de kératine contre l'attaque de parasites de la kératine, caractérisé en ce que l'on traite le matériau que l'on veut protéger avec un agent synergique contenant
(A) au moins une diphénylurée de formule

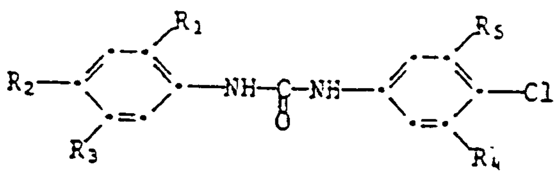

(1)

dans laquelle

- $R_1$ représente un atome d'hydrogène ou un groupe 4-chlorophénoxy-6-sulfonate,
- $R_2$ représente un atome d'hydrogène ou de chlore,
- $R_3$ représente un atome de chlore ou un groupe trifluorométhyle,
- $R_4$ représente un atome d'hydrogène ou de chlore, et
- $R_5$ représente un atome d'hydrogène ou un groupe trifluorométhyle, et

(B) un ester d'acide cyclopropanecarboxylique, de formule générale

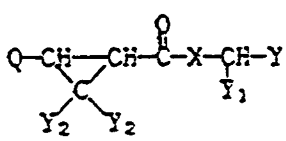

(4)

dans laquelle

Q représente $Br_2C=CBr-$,

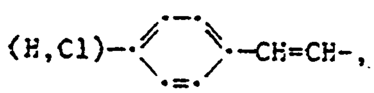

$Cl-C\equiv C-$,

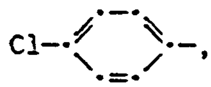

$(CH_3)_3C$-O,

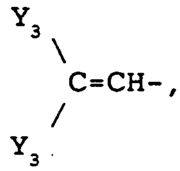

$Y_3$ représentant Cl, Br, F, $CF_3$ ou un groupe alkyle en $C_1$-$C_4$,
$CH_2$ = CH-$CH_2$-O- ou

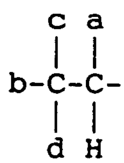

a, b, c et d représentant, indépendamment les uns des autres, Cl, Br ou F, c et d pouvant également représenter un groupe méthyle,

X représente un atome d'oxygène ou de soufre,

$Y_1$ représente un atome d'hydrogène ou un groupe CN, $CH_3$, $C_2H_5$, i-$C_3H_7$,

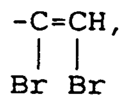

-C≡CH, -C≡C-$CH_3$, -C≡C-$C_6H_5$, -CH = CH-$CH_3$, -$CH_2$-CH = $CH_2$, -CH = $CH_2$ ou -$CH_2$-CH = CHCl,

$Y_2$ représente un groupe méthyle, ou les deux $Y_2$ représentent conjointement le complément d'un cycle cyclopropane, cyclobutane ou cyclopentane, et

Y représente

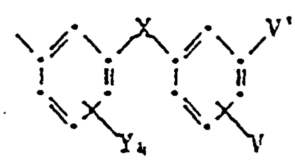,

formule dans laquelle $Y_4$ représente un atome d'hydrogène ou de fluor, V représente un atome d'hydrogène, de chlore, de brome ou de fluor ou un groupe méthyle ou nitro, et V' représente un atome d'hydrogène, V' pouvant également représenter le groupe trifluorométhyle dans le cas où V représente un atome d'hydrogène, et X est tel que défini ci-dessus,

Y pouvant encore représenter

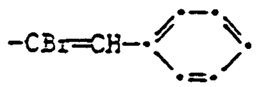 , 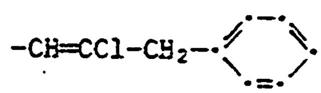 ,

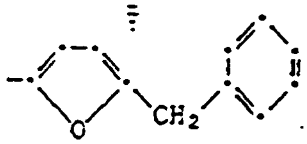 , 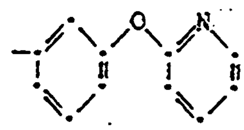 ou 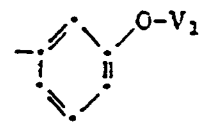

formules dans lesquelles $V_1$ représente $-CH_2-CH=CH_2$, $-CH_2-C\equiv CH$, $-CH_2-CH=CH-CH_3$,

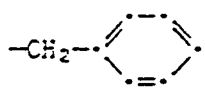 , 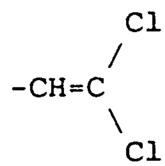 ,

$-CF=CFCl$ ou $-CF=CF_2$.

**13.** Procédé conforme à la revendication 12, caractérisé en ce que l'on dépose l'agent sur le matériau que l'on veut protéger, en une quantité de 10 à 2000 ppm, de préférence de 100 à 1000 ppm, par rapport au matériau que l'on veut protéger.

**14.** Utilisation de l'agent conforme à la revendication 1 contre les mites.

**15.** Utilisation selon la revendication 14, caractérisée en ce que l'agent contient, en tant que compose (A), une diphénylurée de formule

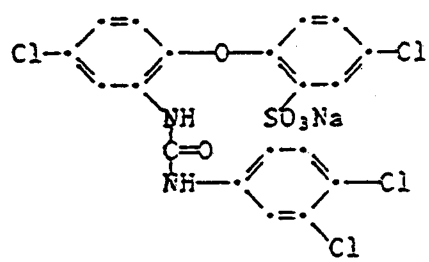 (3)

et, en tant que pyréthroïde synthétique (B), de la perméthrine.

**16.** Utilisation selon la revendication 14, caractérisée en ce que l'agent contient, en tant que composé (A), une diphénylurée de formule

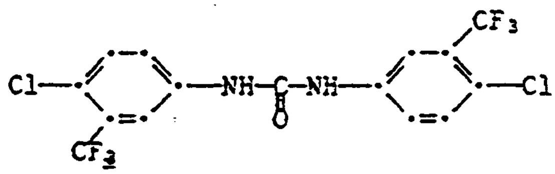 (2)

et, en tant que pyréthroïde synthétique (B), de la perméthrine.